# EUROPÄISCHE PATENTSCHRIFT

(11) **EP 2 585 730 B1**
(45) Veröffentlichungstag und Bekanntmachung des Hinweises auf die Patenterteilung: **13.01.2016**
(21) Anmeldenummer: 11724647.0
(22) Anmeldetag: 14.06.2011
(51) Int. Cl.: F16D 65/00, F16D 65/14

(54) **SCHEIBENBREMSE**
DISC BRAKE
FREIN À DISQUE

(30) Priorität: 24.06.2010 DE 102010024944
(43) Veröffentlichungstag der Anmeldung: 01.05.2013
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE); BAUMGARTNER, Johann, 85368 Moosburg (DE)
(74) Vertreter: Mattusch, Gundula
(86) Internationale Anmeldenummer: PCT/EP2011/059791
(87) Internationale Veröffentlichungsnummer: WO 2011/160976

(56) Entgegenhaltungen:
- DE-A1-102008 029 504
- DE-U1-202007 000 246
- US-A1- 2010 096 226

## Beschreibung

Die Erfindung betrifft eine Scheibenbremse nach dem Oberbegriff des Anspruchs 1.

Im Zusammenhang mit Bestrebungen aus Gründen des Umweltschutzes die Feinstaubbelastung der Luft zu reduzieren, bestehen auch Forderungen dahingehend Bremsstaubemissionen zu verhindern.

Insbesondere aufgrund der geringen Partikelgröße und des Gehaltes an metallischen Bestandteilen wird der beim Bremsen entstehende Abrieb des Reibbelages und der Bremsscheibe zunehmend kritisch gesehen.

Im Stand der Technik sind diesbezüglich unterschiedliche Lösungsansätze bekannt, die sich im Wesentlichen untergliedern in Bremsstaubsammel- und Bremsstaubfilter-Einrichtungen. Allerdings werden die bekannten Konstruktionen den gestellten Anforderungen nicht in einem befriedigenden Maße gerecht.

Bremsstaubsammler, die üblicherweise als Schwerkraftabscheider konzipiert sind, sind zur Vermeidung von Feinstaubemissionen nicht geeignet, da nur relativ grobe Partikel erfasst und durch Schwerkraft abgeschieden werden. Bei Partikelgrößen < 10 µm ist eine Schwerkraftabscheidung nicht mehr möglich.

Bremsstaubfilter-Einrichtungen hingegen können bei entsprechender Wahl des Filtermaterials auch sehr feine Staubpartikel zurückhalten.

Aus der WO 2008/083884 A1 ist der Einsatz einer solchen BremsstaubfilterEinrichtung bekannt, die einerseits der Bremsscheibe einer Scheibenbremse einen Feinstaubfilter und andererseits einen Lüfter aufweist und die beide in einer Radfelge positioniert sind, wobei der Feinstaubfilter gegenüber der Umgebung hermetisch abgedichtet an der Felge gehalten ist.

Zum Durchsatz des beim Bremsen entstehenden Abriebs wird über den Lüfter durch die Felge Luft angesaugt und unter Mitnahme des Abriebs durch den Feinstaubfilter geführt, wo die Staubpartikel ausgefiltert werden.

Da die Bremsscheibe durch den Feinstaubfilter einerseits und den Lüfter andererseits insoweit verschlossen ist, wird die notwendige Kühlung der Teilbelag-Scheibenbremse ausschließlich über die durch den Lüfter eingebrachte Luft erreicht.

Die für einen ausreichend großen Wärmeaustrag notwendigen Durchflussmengen erfordern erhebliche Abmessungen der Filtereinrichtung, wobei die verfügbaren Kühlluftmengen vielfach dennoch unzureichend sind, was zu erhöhten Bremstemperaturen und mit einem sich daraus ergebenden erhöhten Bremsenverschleiß verbunden ist. Insbesondere hinsichtlich der Betriebskosten steht die bekannte Einrichtung daher einer optimierten Verwendung entgegen.

In diesem Sinne muss auch der Umstand bewertet werden, dass mit der Kühlluft auch Schmutz aus der Umgebung angesaugt wird, mit der Folge einer nur relativ geringen Einsatzdauer des Feinstaubfilters. In recht kurzen Intervallen muss ein solcher Feinstaubfilter deshalb ausgewechselt werden.

Um hier Abhilfe zu schaffen, wird in der US 2010/096226 A1 ein Gehäuse vorgeschlagen, das aus Gehäuseteilen besteht, mit jeweils einer einen Filter aufnehmenden Kammer. Hierbei ist jedes Gehäuseteil an ein Sauggebläse angeschlossen, mittels dessen mit Abrieb befrachtete Luft durch den Filter gesaugt wird.

Der Erfindung liegt die Aufgabe zugrunde, eine Scheibenbremse der gattungsgemäßen Art so weiterzuentwickeln, dass ein Entweichen des Bremsabriebs in die Umgebung verhindert wird, bei minimierten Betriebskosten.

Diese Aufgabe wird durch eine Scheibenbremse mit den Merkmalen des Anspruchs 1 gelöst.

Durch diese konstruktive Ausbildung wird praktisch eine Kapselung der Reibringe der Bremsscheibe erreicht, die sowohl die Nutz-, d.h. die Reibfläche überdeckt wie auch die durch die Dicke der Reibringe definierte Mantelfläche.

Dabei bildet diese mantelseitige Abdeckfläche einen kreisrunden Kragen, wie er ebenfalls am inneren Umfang vorgesehen ist, so dass das erfindungsgemäße Gehäuse eine Haube bildet, die lediglich im Überdeckungsbereich des Reibbelages der Bremsbacke geöffnet ist.

Die Abdeckflächen des Gehäuses, das gegenüber dem Bremssattel fest steht und daran oder an einem ortsfesten Bremsträger befestigt ist, ist mit geringem Spiel zu den abgedeckten Bereichen positioniert.

Am inneren und äußeren Umfang ist das Gehäuse als Spaltdichtung ausgebildet, beispielsweise als Labyrinthdichtung, die im Betrieb der Saugeinrichtung ein Einsaugen von Frischluft ermöglicht, unter Mitnahme des beim Bremsen entstehenden Abriebs.

Die die beidseitig der Bremsscheibe vorhandenen Reibringe abdeckenden Abdeckteile können durch Verbindungslaschen miteinander verbunden sein, wobei diese Verbindungslaschen abständig zueinander angeordnet sind, so dass sich ausreichend große freie Bereiche ergeben, durch die bei einer innen belüfteten Bremsscheibe eine ungehinderte Kühlung durch Luftaustausch gewährleistet bleibt.

Zweckmäßigerweise besteht jedes Gehäuse aus zwei sich als Halbkreis-Segmente darstellenden Teilen, die beispielsweise durch Verschrauben miteinander verbunden sind, was eine sehr einfache Montage und Demontage ermöglicht.

Eine mit der Saugeinrichtung verbundene Saugleitung mündet in den zwischen dem Gehäuse und dem zugeordneten Reibring gebildeten Spaltraum, wobei für beide Gehäuse eine gemeinsame Saugleitung vorgesehen ist.

Die zwischen der Saugeinrichtung und dem Gehäuse angeordnete Entstaubungsvorrichtung besteht bevorzugt aus einem in Richtung des Gehäuses zunächst angeordneten Grobstaub-Abscheider, durch den die belastete, abgesaugte Luft geführt wird hin zu einem Feinstaubfilter, der der Saugeinrichtung, vorzugsweise einem Sauggebläse, vorgeschaltet ist, während dem Sauggebläse nachgeordnet ein Schalldämpfer vorgesehen ist, durch den die insoweit gereinigte Luft ins Freie geführt wird.

Die Schaltung der Saugeinrichtung erfolgt zweckmäßigerweise über eine mit der Bremseinrichtung gekoppelte Schalteinheit, die so gesteuert ist, dass die Saugeinrichtung auch nach Beendigung der Bremsung eine gewisse Zeit in Betrieb ist. Bei nicht gebremster, freier Fahrt und nach der vorgegebenen Nachlaufzeit ist eine Absaugung nicht notwendig. Damit kann mit relativ geringen Absaugluftmengen eine wirksame Filterung erreicht werden, die sich vor allem durch geringe Betriebskosten auszeichnet.

Hierzu trägt auch bei, dass durch die Anordnung des Grobstaub-Abscheiders vor dem Feinstaubfilter dieser in erheblich geringerem Maße belastet wird als dies bislang der Fall ist, insbesondere auch deshalb, weil durch die erwähnten Spaltdichtungen zwischen den Reibringen bzw. den Bremsbelägen und dem Gehäuse kein Umgebungsschmutz eingesaugt wird, sondern ausschließlich Umgebungsluft, d.h., sozusagen Frischluft.

Weitere vorteilhafte Ausbildungen der Erfindung werden in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Scheibenbremse in einer perspektivischen Vorderansicht
- Figur 2: einen Teil der Scheibenbremse in einer perspektivischen Rückansicht
- Figur 3: einen Teilausschnitt der Scheibenbremse, gleichfalls schaubildlich dargestellt

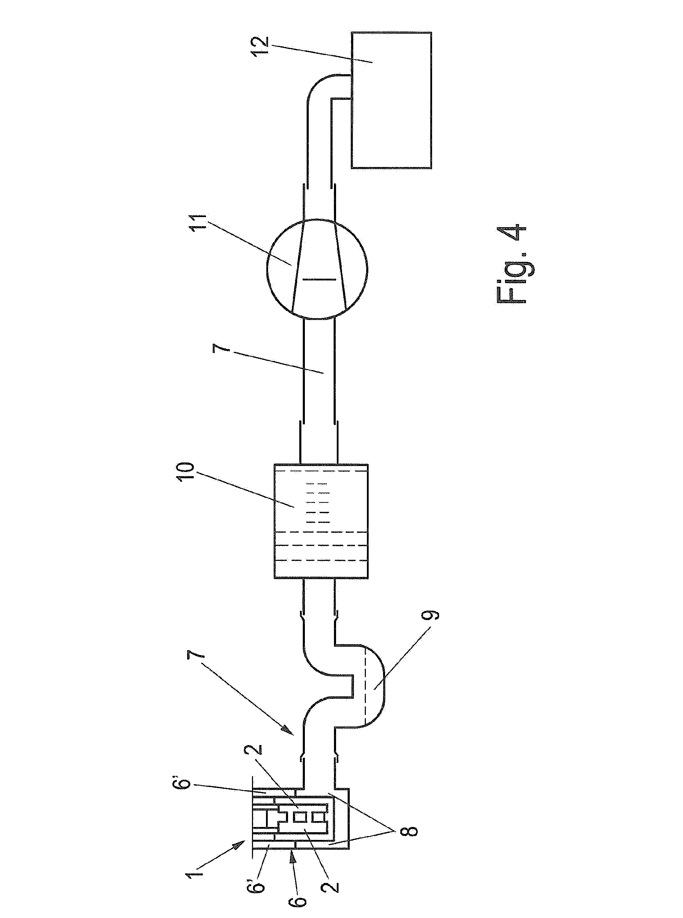

- Figur 4: einen Teil der Scheibenbremse mit angeschlossenen zusätzlichen Aggregaten in einer schematisch dargestellten Ansicht.

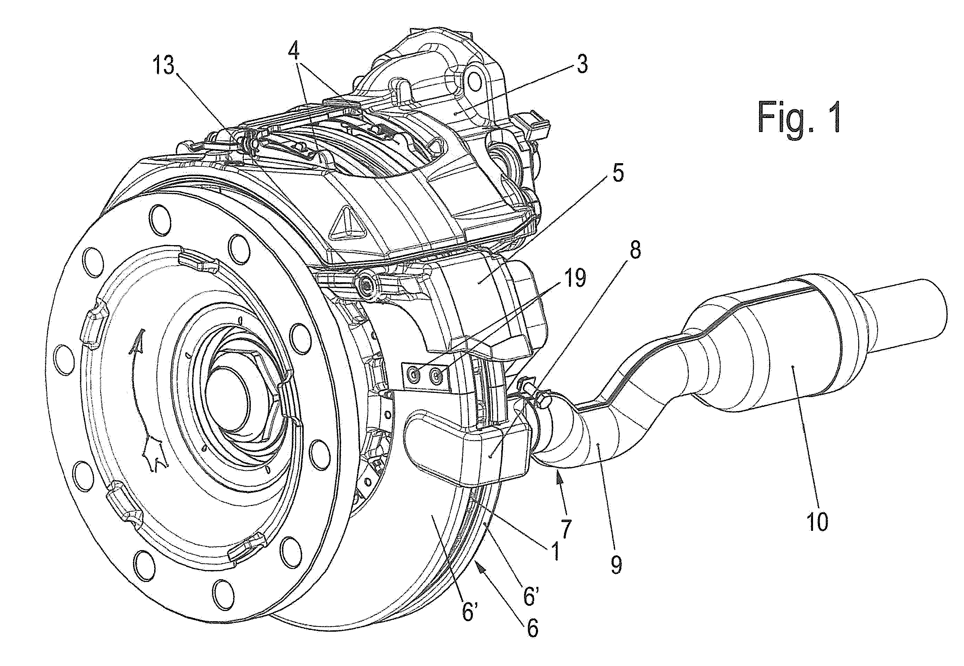

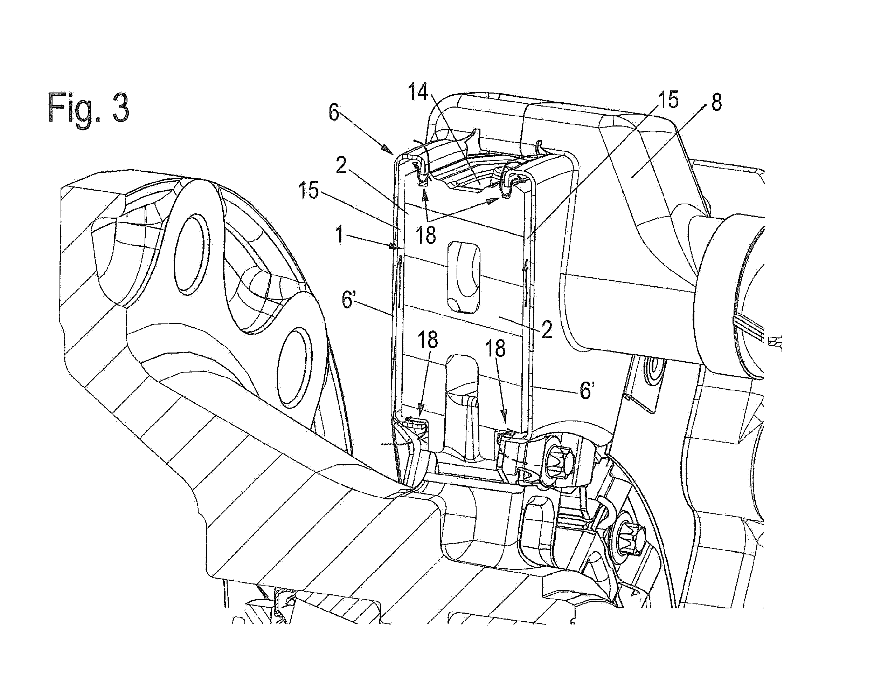

In der Figur 1 ist eine Scheibenbremse gezeigt, mit einem eine Bremsscheibe 1 übergreifenden Bremssattel 3, in dem mit nicht erkennbaren Reibbelägen versehen Bremsbacken 4 angeordnet sind, die jeweils mit ihrem Reibbelag beidseitig an Reibringe 2 (Figur 3) der Bremsscheibe 1 anpressbar sind.

Erfindungsgemäß sind die Reibringe 2 mit einem gegenüber dem Bremssattel 3 fest stehenden haubenartigen Gehäuse 6 abgedeckt, das aus zwei Abdeckteilen 6' besteht.

Im Beispiel ist die Bremsscheibe 1 innen belüftet mit Kühlkanälen 14 ausgebildet, wobei die jeweils einen Reibring 2 überdeckenden Abdeckteile 6' durch abständig zueinander angeordnete Verbindungslaschen 16 miteinander verbunden sind.

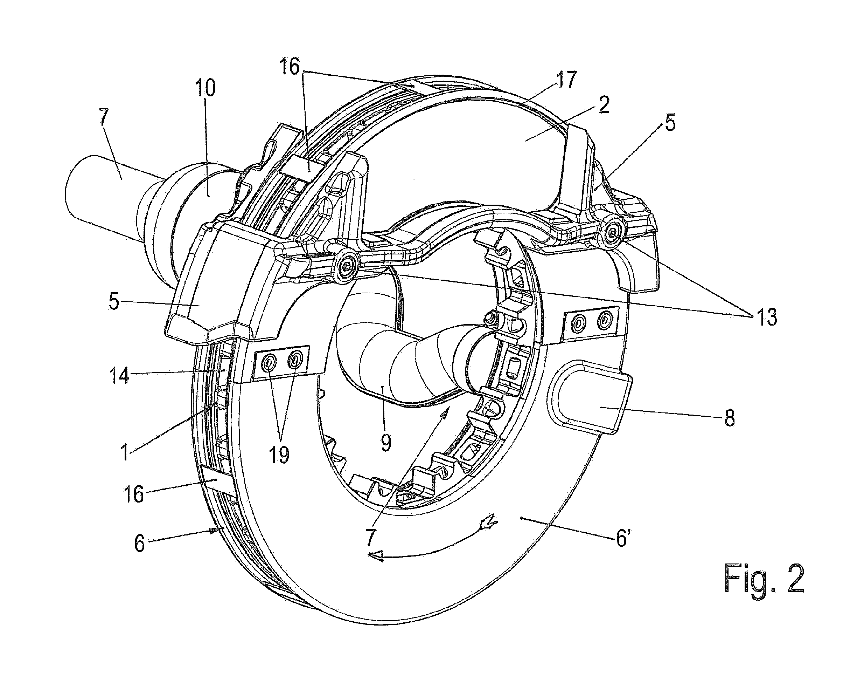

Wie insbesondere die Figur 2 sehr deutlich wiedergibt, in der die Scheibenbremse von der Montageseite her ohne den Bremssattel 3 gezeigt ist, ist das Gehäuse 6 im projizierten Überdeckungsbereich des Reibbelages der Bremsbacke 4 ausgespart, wozu ein Ausschnitt 17 in das zugeordnete Abdeckteil 6' eingebracht ist. Ein durch die Dicke des jeweiligen Reibringes bestimmter Bereich des Abdeckteiles 6' ist allerdings umfänglich geschlossen geführt, sowohl am Außenumfang des Reibringes 2 wie auch an dessen Innenumfang.

In diesen Bereichen sind die beiden Abdeckteile 6' als Spaltdichtung 18 ausgebildet, die sich in einen Spaltraum 15 fortsetzen, der durch einen geringen Abstand zwischen der Reibfläche des Reibringes 2 und der zugewandten Seite des Abdeckteile 6' gebildet ist.

An die beiden Abdeckteile 6' ist ein Sauganschluss 8 angeschlossen, der in den zugeordneten Spaltraum 15 mündet und der in eine Saugleitung 7 übergeht, die im weiteren Verlauf mit einer Saugeinrichtung in Form eines Sauggebläses 11 verbunden ist.

Zwischen dem Sauggebläse 11 und dem Gehäuse 6 ist eine Entstaubungsvorrichtung angeordnet, bestehend aus, ausgehend vom Sauganschluss 8, einem Grobstaub-Abscheider 9 und einem in Saugrichtung nachgeordneten Feinstaubfilter 10.

Die durch das Sauggebläse 11 über die Spaltdichtungen 18 und die Spalträume 15 angesaugte Luft transportiert den bei einer Bremsung anfallenden Abrieb hin zu der Entstaubungsvorrichtung. Die aus dem Feinstaubfilter 10 austretende sozusagen frachtfreie Luft wird über einen dem Sauggebläse 11 nachgeordneten Schalldämpfer in die Umgebung abgegeben.

Die beiden, jeweils einem Reibring 2 zugeordneten Abdeckteile 6' sind über Befestigungsschrauben 13 am Bremsträger 5 angeschlossen.

Zur einfacheren Montage des Gehäuses 6 ist dies geteilt, so dass zwei halbkreisförmige Gehäusehälften vorliegen, die über Verbindungsschrauben 19 miteinander verbunden sind.

Die Spaltdichtungen 18, die beispielsweise als Labyrinthdichtungen ausgebildet sein können, sind entsprechend den Einbaumöglichkeiten und -toleranzen sowie unter Berücksichtigung der Wärmeausdehnung der Bremsscheibe 1 ausgebildet.

Die maßliche Abstimmung der Dichtspalten und der Spalträume wird durch den notwendigen Absaug-Luftstrom bestimmt, da dieser ausreichend groß bemessen sein muss, um mit der entstehenden Saugwirkung ein Austreten von Bremsstaub und gegebenenfalls entstehenden Rauchgasen in die Umgebung zu verhindern.

### Bezugszeichenliste

- 1: Bremsscheibe
- 2: Reibring
- 3: Bremssattel
- 4: Bremsbacke
- 5: Bremsträger
- 6: Gehäuse
- 6': Abdeckteil
- 7: Saugleitung
- 8: Sauganschluss
- 9: Grobstaub-Abscheider
- 10: Feinstaubfilter
- 11: Sauggebläse
- 12: Schalldämpfer
- 13: Befestigungsschraube
- 14: Kühlkanal
- 15: Spaltraum
- 16: Verbindungslasche
- 17: Ausschnitt
- 18: Spaltdichtung
- 19: Verbindungsschraube

## Patentansprüche

1. Scheibenbremse, mit einem eine Bremsscheibe (1) übergreifenden Bremssattel (3), in dem mit Reibbelägen versehene Bremsbacken (4) angeordnet sind, die jeweils mit ihrem Reibbelag beidseitig an Reibringe (2) der Bremsscheibe (1) anpressbar sind, wobei die Reibringe (2) außerhalb des Überdeckungsbereiches der Reibbeläge mit einem gegenüber dem Bremssattel (3) fest stehenden Gehäuse (6) abgedeckt sind, das mit einer Saugeinrichtung verbunden ist, **dadurch gekennzeichnet, dass** das Gehäuse (6) aus zwei, den jeweiligen Reibring (2) haubenartig überdeckenden Abdeckteilen (6') besteht und zwischen dem Gehäuse (6) und der Saugeinrichtung eine Entstaubungsvorrichtung vorgesehen ist.

2. Scheibenbremse nach Anspruch 1, **dadurch gekennzeichnet, dass** im Überdeckungsbereich des Gehäuses (6) mit den Reibringen (2) jeweils ein Spaltraum (15) vorgesehen ist.

3. Scheibenbremse nach Anspruch 1 oder 2, **dadurch gekennzeichnet, dass** der den inneren und den äußeren Umfang der Reibringe (2) überdeckende Bereich des Gehäuses in Korrespondenz mit den Reibringen (2) als berührungslose Spaltdichtung (18) ausgebildet ist.

4. Scheibenbremse nach Anspruch 3, **dadurch gekennzeichnet, dass** die Spaltdichtung (18) als Labyrinthdichtung gestaltet ist.

5. Scheibenbremse nach einem der vorhergehenden Ansprüche, **dadurch gekennzeichnet, dass** das Gehäuse (6) zweiteilig in Form von Halbringen ausgebildet ist, die durch Verbindungsschrauben (19) miteinander verbunden sind.

6. Scheibenbremse nach einem der vorhergehenden Ansprüche, **dadurch gekennzeichnet, dass** das Gehäuse (6) an einem ortsfesten Bremsträger (5) befestigt ist.

7. Scheibenbremse nach einem der vorhergehenden Ansprüche, **dadurch gekennzeichnet, dass** die Abdeckteile (6') durch abständig zueinander angeordnete Verbindungslaschen miteinander verbunden sind.

8. Scheibenbremse nach einem der Ansprüche 2 bis 7, **dadurch gekennzeichnet, dass** in jeden Spaltraum (15) eine mit dem Gehäuse (6) verbundene Saugleitung (8) mündet, die an die Saugeinrichtung angeschlossen ist.

9. Scheibenbremse nach einem der vorhergehenden Ansprüche, **dadurch gekennzeichnet, dass** die Entstaubungsvorrichtung aus einem Grobstaub-Abscheider (9) und einem Feinstaubfilter (10) gebildet ist.

10. Scheibenbremse nach Anspruch 9, **dadurch gekennzeichnet, dass** in Saugrichtung der Feinstaubfilter (10) dem Grobstaub-Abscheider (9) nachgeordnet ist.

11. Scheibenbremse nach einem der Ansprüche 9 oder 10, **dadurch gekennzeichnet, dass** die Saugeinrichtung als Sauggebläse (11) ausgebildet ist.

12. Scheibenbremse nach einem der Ansprüche 9 bis 11, **dadurch gekennzeichnet, dass** die in der Entstaubungsvorrichtung gereinigte Luft durch einen an das Sauggebläse (11) sich anschließenden Schalldämpfer (12) führbar ist.

## Claims

1. Disc brake comprising a brake calliper (3), which overlaps a brake disc and in which are arranged brake pads (4) provided with friction linings, each of which can be pressed with its friction lining on both sides against friction rings (2) of the brake disc (1), the friction rings (2) being covered outside the region of overlap of the friction linings by a housing (6), which is stationary with respect to the brake calliper (3) and is connected to a suction device, **characterised in that** the housing (6) consists of two covering parts (6') covering the respective friction ring (2) in the manner of hoods, and **in that** a dust removal device is provided between the housing (6) and the suction device.

2. Disc brake according to claim 1, **characterised in that** a gap volume (15) is provided in the region of overlap of the housing (6) with each of the friction rings (2).

3. Disc brake according to claim 1 or 2, **characterised in that** the that region of the housing which overlaps the inner and outer circumference of the friction rings (2) is designed in correspondence with the friction rings (2) as a noncontact gap seal (18).

4. Disc brake according to claim 3, **characterised in that** the gap seal (18) is configured as a labyrinth seal.

5. Disc brake according to any of the preceding claims, **characterised in that** the housing (6) is of two-part design in the form of half-rings, which are connected to one another by connecting screws (19).

6. Disc brake according to any of the preceding claims, **characterised in that** the housing (6) is secured on a fixed-location adapter (5).

7. Disc brake according to any of the preceding claims, **characterised in that** the covering parts (6') are connected to one another by connecting tabs arranged spaced apart.

8. Disc brake according to any of claims 2 to 7, **characterised in that** a suction line (8), which is joined to the housing (6) and connected to the suction device, opens into each gap volume (15).

9. Disc brake according to any of the preceding claims, **characterised in that** the dust removal device is represented by a coarse-dust separator (9) and a fine-dust filter (10).

10. Disc brake according to claim 9, **characterised in that** the fine-dust filter (10) is arranged downstream of the coarse-dust separator (9) in the suction direction.

11. Disc brake according to claim 9 or 10, **characterised in that** the suction device is designed as a suction fan (11).

12. Disc brake according to any of claims 9 to 11, **characterised in that** the air cleaned in the dust removal device can be passed through a silencer (12) adjoining the suction fan (11).

## Revendications

1. Frein à disque, comprenant un étrier (3) de frein, qui enjambe un disque (1) de frein et dans lequel sont montées des mâchoires (4) de frein, qui sont pourvues de garnitures de friction et qui peuvent être pressées respectivement par leur garniture de frein des deux côtés sur des anneaux (2) de friction du disque (1) de frein, les anneaux (2) de friction étant, à l'extérieur de la partie de recouvrement des garnitures de frein, recouverts d'une enveloppe (6), qui est fixe par rapport à l'étrier (3) de frein et qui est reliée à un dispositif d'aspiration, **caractérisé en ce que** l'enveloppe (6) est constituée de deux parties (6') de recouvrement recouvrant à la manière d'une hotte l'anneau (2) de friction respectif, et il est prévu un dispositif de dépoussiérage entre l'enveloppe (6) et le dispositif d'aspiration.

2. Frein à disque suivant la revendication 1, **caractérisé en ce qu'**il est prévu respectivement un espace (15) de séparation dans la partie de recouvrement de l'enveloppe (6) par les anneaux (2) de friction.

3. Frein à disque suivant la revendication 1 ou 2, **caractérisé en ce que** la partie de l'enveloppe recouvrant le pourtour intérieur et le pourtour extérieur des anneaux (2) de friction est constituée en correspondance avec les anneaux (2) de friction sous la forme d'un joint (18) de séparation sans contact.

4. Frein à disque suivant la revendication 3, **caractérisé en ce que** le joint (18) de séparation est constitué en joint à labyrinthe.

5. Frein à disque suivant l'une des revendications précédentes, **caractérisé en ce que** l'enveloppe (6) est constituée en deux parties sous la forme de moitiés d'anneau qui sont reliées entre elles par des vis (19) de liaison.

6. Frein à disque suivant l'une des revendications précédentes, **caractérisé en ce que** l'enveloppe (6) est fixée à un support (5) de frein à poste fixe.

7. Frein à disque suivant l'une des revendications précédentes, **caractérisé en ce que** les parties (6') de recouvrement sont reliées entre elles par des pattes de liaison à distance les unes des autres.

8. Frein à disque suivant l'une des revendications 2 à 7, **caractérisé en ce que** dans chaque espace (15) de séparation débouche un conduit (8) d'aspiration, qui communique avec l'enveloppe (6) et qui est raccordé au dispositif d'aspiration.

9. Frein à disque suivant l'une des revendications précédentes, **caractérisé en ce que** le dispositif de dépoussiérage est formé d'un séparateur (9) de poussière grossière et d'un filtre (10) de poussière fine.

10. Frein à disque suivant la revendication 9, **caractérisé en ce que**, dans le sens de l'aspiration, le filtre (10) de poussière fine est monté en aval du séparateur (9) de poussière grossière.

11. Frein à disque suivant l'une des revendications 9 ou 10, **caractérisé en ce que** le dispositif d'aspiration est constitué sous la forme d'un ventilateur (11) aspirant.

12. Frein à disque suivant l'une des revendications 9 à 11, **caractérisé en ce que** l'air épuré dans le dispositif de dépoussiérage peut être conduit dans un amortisseur de bruit se raccordant au ventilateur (11) aspirant.
